# EUROPEAN PATENT SPECIFICATION

(11) **EP 3 978 885 B1**
(45) Date of publication and mention of the grant of the patent: **07.05.2025**
(21) Application number: 20814463.4
(22) Date of filing: 16.04.2020
(51) Int. Cl.: G01K 7/22, G01K 1/02, G01L 1/20

(54) **SENSOR SYSTEM AND ARTICLE COMPRISING SAME**
SENSORSYSTEM UND ARTIKEL MIT DIESEM SYSTEM
SYSTÈME DE DÉTECTION ET ARTICLE COMPRENANT CE DERNIER

(30) Priority: 31.05.2019 JP 2019102308
(43) Date of publication of application: 06.04.2022
(73) Proprietor: Murata Manufacturing Co., Ltd., Nagaokakyo-shi, Kyoto 617-8555 (JP)
(72) Inventor: HOSHIKUMA, Takahide, Nagaokakyo-shi, Kyoto 617-8555 (JP); HIOKI, Yasunori, Nagaokakyo-shi, Kyoto 617-8555 (JP); KATO, Tadashi, Nagaokakyo-shi, Kyoto 617-8555 (JP)
(74) Representative: Stöckeler, Ferdinand
(86) International application number: PCT/JP2020/016746
(87) International publication number: WO 2020/241109

(56) References cited:
- WO-A1-2013/114289
- WO-A1-2018/138993
- JP-A- 2000 111 368
- JP-A- 2012 164 463
- JP-A- 2018 179 687
- JP-A- H0 755 607
- JP-U- H0 514 871
- US-A- 4 530 249
- US-A- 4 530 249
- US-A1- 2018 164 162

## Description

### Technical Field

The present invention relates to sensor systems and articles including the same.

### Background Art

Conventionally, thermocouples, NTC thermistors having a negative temperature coefficient, PTC thermistors having a positive temperature coefficient, and others have been generally used as temperature sensors. The temperature sensors have been used in a wide range of use purposes. For example, a temperature sensor may be attached to a battery to detect the temperature of the battery. More specifically, Patent Document 1 describes that, to keep the battery at an appropriate temperature in a wide range of environmental temperatures and thereby prevent degradation in performance and short life of the battery, in a battery pack configured by connecting a plurality of single battery cells, a heater (for heating) and a heat-conductive plate (for heat dissipation) are arranged so as to be alternately stacked to interpose a single battery cell therebetween, a temperature sensor is attached to the single battery cell, and heating or stopping the heater is performed based on the battery temperature detected by the temperature sensor.

A temperature sensor including first and second electrode layers and a thermistor layer between the electrode layers is disclosed in US 2018/0164162 A1. The thermistor layer includes a spinel-type semiconductor ceramic composition powder containing Mn, Ni, and Fe, and an organic polymer component.

### Citation List

### Patent Documents

Patent Document 1: JP 2011 243524 A
Patent Document 2: JP 2008 309589 A

### Summary of Invention

### Technical Problem

In recent years, in electric vehicles (EV), hybrid electric vehicles (HEV), and so forth, a battery management system (BMS) for safely and appropriately using a battery stack (battery pack) with a plurality of connected battery cells (single battery cells) in a long-life manner has been developed. In the BMS, in addition to detecting the temperature of each battery cell by a temperature sensor, it would be convenient if deformation of each battery cell can be detected.

Meanwhile, a sensor device capable of acquiring a pressure distribution, in other words, detecting an area applied with an external force, has been known. Patent Document 2 discloses a sensor structure including: a deformation sensor which has conductive fillers dispersed in an elastomer and is made of an elastic member with its electrical resistivity changed by elastic deformation; and four or more electrodes arranged on a peripheral part of the deformation sensor so as to be separated from one another. It is described that when an external force is applied to a pressure-receiving surface of the deformation sensor, a voltage between paired electrodes is detected by switching the paired electrodes to perform arithmetic processing, and thereby a position applied with the external force can be calculated.

However, a single sensor device capable of detecting both of a temperature and an external force has not been known so far.

An object of the present invention is to provide a sensor system capable of detecting both of a temperature and an external force and an article including this sensor system.

### Solution to Problem

According to the present invention, there is provided a sensor system according to claim **1.** Further developments of the invention are defined in the dependent claims. Advantageous Effects of Invention

According to the present invention, a single sensor system capable of detecting both of a temperature and an external force is provided. Furthermore, according to the present invention, an article including this sensor system is provided.

### Brief Description of Drawings

[Fig. 1] Fig. 1 relates to a sensor device in an embodiment of the present invention, in which (a) is a schematic top view of two electrodes arranged on a base material, (b) is a schematic top view of a sensor element, and (c) is a schematic partial sectional view of the sensor device viewed along an A-A' line of (b).
[Fig. 2] Fig. 2 is an enlarged schematic sectional view of a thermistor part in the embodiment of the present invention.
[Fig. 3] Fig. 3(a) is a graph schematically depicting thermistor characteristics of an NTC when the external force is zero, and Fig. 3(b) is a graph schematically depicting thermistor characteristics of a PTC when the external force is zero.
[Fig. 4] Fig. 4 is a graph schematically depicting changes in a resistance value with time when the temperature is constant.
[Fig. 5] Fig. 5 relates to a sensor device in another embodiment of the present invention, in which (a) is a schematic exploded top view of two electrodes and a thermistor part laminated on a base material and (b) is a schematic partial sectional view of the sensor device viewed along an A-A' line of (a).
[Fig. 6] Fig. 6 is a schematic top view of a sensor device in still another embodiment of the present invention.
[Fig. 7] Fig. 7 is a chart depicting a flow of an electric signal process of a sensor system in one embodiment of the present invention.
[Fig. 8] Fig. 8 is a diagram describing the electric signal process of the sensor system in the one embodiment of the present invention, and is a graph of an actual measured value (solid line) of a resistance value and a temperature component (dotted line) of the resistance value separated by filter application with respect to time.
[Fig. 9] Fig. 9 is a diagram describing the electric signal process of the sensor system in the one embodiment of the present invention, in which (a) depicts an exemplary temperature distribution to which the sensor device is exposed, (b) depicts a state in which exemplary external forces are applied to the sensor device, and (c) is a graph of an actual measured value (solid line) of a resistance value and a temperature component (dotted line) of a resistance value separated by filter application with respect to position on a line along B-B' of (a) and (b).
[Fig. 10] Fig. 10 is a schematic view of an article in one embodiment of the present invention, in which (a) is a schematic perspective view of the article and (b) is a schematic sectional view viewed along a C-C' line of (a).
[Fig. 11] Fig. 11 is a diagram describing a sensor device in a modification of the present invention, and is a graph schematically depicting thermistor characteristics of a PTC.
[Fig. 12] Fig. 12 is a graph in which change ratios of resistance values measured by a sensor device of Example 1 are plotted with respect to time.
[Fig. 13] Fig. 13 is a graph in which change ratios of resistance values measured by a sensor device of Example 2 are plotted with respect to time.
[Fig. 14] Fig. 14 is a graph in which change ratios of resistance values measured by a sensor device of Reference Example 1 are plotted with respect to time.

### Description of Embodiments

While embodiments of the present invention are described in detail below with reference to the drawings, the present invention is not limited to these embodiments.

### (Embodiment 1)

The present embodiment relates to a sensor device having comb-shaped electrodes.

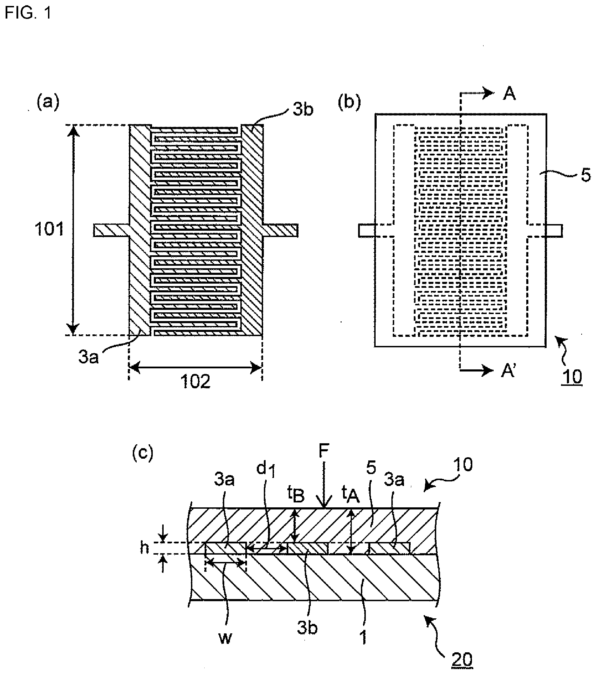

As schematically depicted in Fig. 1, a sensor device 20 of the present embodiment includes a base material 1, and a sensor element 10 arranged on the base material 1. The sensor element 10 includes two electrodes 3a and 3b and a thermistor part 5 arranged between the two electrodes 3a and 3b. The thermistor part 5 is formed of, as will be described below, conductive or semiconductor particles and an organic polymeric component. The sensor element 10 detects, based on a resistance value measured between the two electrodes 3a and 3b, an external force applied to the sensor element 10 and a temperature to which the sensor element 10 is exposed.

The base material 1 is made of any appropriate material, and can be configured of, for example, resin, glass, or the like, and can be a so-called resin film or flexible substrate (for example, film or flexible substrate that can be configured of any of polyethylene terephthalate (PET), polyester, polypropylene, polyethylene naphthalate, polyphenylene sulfide, polyimide, polyethylene, polyvinyl alcohol, polycarbonate, polystyrene, polyvinyl acetal, polyvinyl butyral, polyvinyl chloride, polyvinylidene chloride, polyacrylonitrile, ethylene-vinyl acetate copolymer, ethylene-vinyl alcohol copolymer, nylon, any appropriate ionomer, and so forth), a glass substrate, a fiber-reinforced plastic, a glass cloth, or the like. The base material 1 preferably has flexibility, that is, for example, is a film or flexible substrate. This allows the external force to be easily detected, as will be described further below. The base material 1 itself has electrical insulating properties, and a wire (not depicted) is formed thereon so that a resistance value of the sensor element 10 can be measured. The base material 1 may have a single-layer or multilayer structure, and an adhesive layer can be provided as required between the wire and the base material 1.

In the present embodiment, the sensor element 10 is arranged on the base material 1 and is configured to include the two electrodes 3a and 3b and the thermistor part 5. The two electrodes 3a and 3b configure counter electrodes, the thermistor part 5 is arranged between these electrodes 3a and 3b, and at least an opposed portion of the two electrodes 3a and 3b is preferably buried in the thermistor part 5. The thermistor part 5 has a thickness t_{A}, which can be, for example, approximately 200 µm or less, typically approximately 5 µm or more and approximately 50 µm or less.

In the present embodiment, the two electrodes 3a and 3b are comb-shaped electrodes as schematically depicted in Fig. 1. More specifically, the electrodes 3a and 3b each have a comb shape, and these comb teeth are alternately arranged and buried in the thermistor part 5 except a lead part of each of the electrodes 3a and 3b. A height h of the electrodes 3a and 3b, the number of comb teeth, a width w of the comb teeth, a distance d₁ between opposed portions of the comb teeth, a distance t_{B} (= t_{A}-h) between an upper end portion of each of the electrodes 3a and 3b and the surface of the thermistor part 5 (hereinafter also referred to simply as "coating thickness" in the specification), the sizes of the long side 101 and the short side 102 formed by the electrodes 3a and 3b, and so forth can be selected as appropriate in accordance with the use purpose of the sensor device 20. For example, the height h of the electrodes 3a and 3b can typically be 1 µm or more and 50 µm or less. The two electrodes 3a and 3b are each led from the sensor element 10 to be connected to a wire (not depicted) formed on the base material 1. The lead directions of the electrodes 3a and 3b may be opposite as depicted in Fig. 1(a) and Fig. 1(b) (while the electrodes 3a and 3b are led to right and left when viewed from top in the depicted embodiment, this is not meant to be restrictive, and may be led, for example, upward and downward) or may be the same (for example, when viewed from top, the electrodes 3a and 3b may be both led to the same, either upward or downward), or either one or both of the electrodes 3a and 3b may be led via a via-hole conductor or the like provided in the base material 1 to an opposite surface (lower surface in the depicted embodiment) of the base material 1. The two electrodes 3a and 3b and the wire may be a circuit pattern simultaneously formed on the base material 1, but this is not meant to be restrictive.

However, the present invention is not limited to this embodiment, and the two electrodes may have any appropriate mode as long as they are opposed to each other and a thermistor part is arranged therebetween.

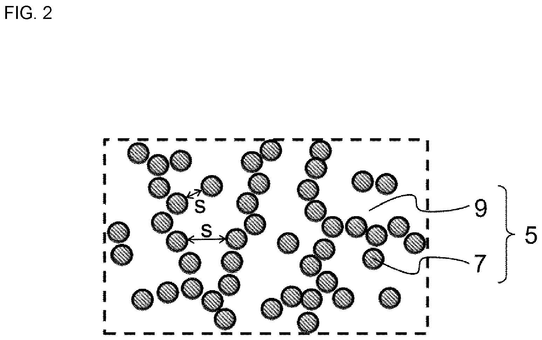

As schematically depicted in Fig. 2, the thermistor part 5 is formed of conductive or semiconductor particles 7 and an organic polymeric component 9. The conductive or semiconductor particles 7 are understood as fillers (hereinafter also referred to simply as "fillers" in the specification), and can be present as being dispersed in the organic polymeric component 9. The fillers 7 and the organic polymeric component 9 can be selected as appropriate so that a resistance value R measured between the electrodes 3a and 3b changes with temperature T and external force F in accordance with the use purpose of the sensor device (such as, for example, an assumed use temperature range and a mode of application of the external force).

The sensor element 10 of the present embodiment can be fabricated as follows, for example. First, the base material 1 and conductive paste (so-called silver paste, copper paste, or the like; but this is not meant to be restrictive) are prepared. Also, thermistor paste is prepared by mixing at least the fillers 7 and the organic polymeric component 9 at a predetermined ratio. Then, on the base material 1, printing with the conductive paste and printing with the thermistor paste are sequentially performed each with a predetermined pattern. As required, heat treatment may be performed. Preferably, a first heat treatment can be performed after printing with the conductive paste, and then a second heat treatment can be performed after printing with the thermistor paste. With this, the electrodes 3a and 3b are formed from the conductive paste and the thermistor part 5 is formed from the thermistor paste, and the sensor element 10 is thereby fabricated. Alternatively, a conductive substance (for example, silver, copper, or the like) may be vapor-deposited on the base material 1 to form the electrodes 3a and 3b. Alternatively, the electrodes 3a and 3b may be formed by preparing a base material with a metal foil affixed to the entire surface of the base material 1, such as a so-called single-sided copper-clad sheet, and etching an unnecessary portion of that metal foil.

The sensor device 20 of the present embodiment detects the external force F applied to the sensor element 10 and the temperature T to which the sensor element 10 is exposed (by extension, temperature of the thermistor part 5), based on the resistance value R measured between the two electrodes 3a and 3b. The method of measuring the resistance value R is not particularly limited, and can be performed by, for example, letting a predetermined current flow between two electrodes and measuring a voltage occurring therebetween, or by applying a predetermined voltage between two electrodes and measuring a current flowing therebetween.

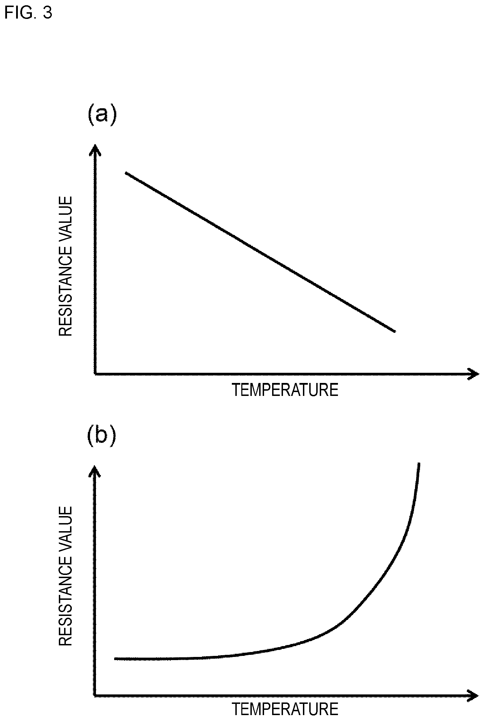

Changes in the resistance value R with the temperature T can be determined by the material characteristics of the thermistor part 5. The property in which the resistance R (more specifically, electrical resistivity; the same goes for the specification) changes with the temperature T of the thermistor part 5 is known as thermistor characteristics (R-T characteristics). The thermistor part 5 may have a negative temperature coefficient (NTC) or a positive temperature coefficient (PTC). Schematically, when the external force F is zero, the NTC can exhibit R-T characteristics as depicted in Fig. 3(a), and the PTC can exhibit R-T characteristics as depicted in Fig. 3(b).

In the thermistor part 5 having a negative temperature coefficient (NTC), for example, semiconductor particles in which the resistance value decreases with an increase in temperature can be used as the fillers 7, and any appropriate one or two or more types of organic polymer (the term "organic polymer" includes polymer and resin) can be used as the organic polymeric component 9, together with another material case by case. The thermistor characteristics (R-T characteristics) of this thermistor part can be adjusted by changing the ratio of content (ratio of volume) of the fillers 7 in the thermistor part 5. For example, by further increasing the ratio of content (ratio of volume) of the fillers 7, the R-T characteristics as depicted in Fig. 3(a) can be shifted further lower (to a direction in which the resistance value R further decreases).

More specifically, International Publication No. 2017/022373 and International Publication No. 2018/13899, for example, can be referred to. The semiconductor particles may be spinel-type semiconductor ceramic composite powder containing Mn, Ni, and Fe. In this semiconductor ceramic composite powder, the mole fraction between Mn and Ni is 85/15 ≥ Mn/Ni ≥ 65/35 and, when the total mole amount of Mn and Ni is 100 mole parts, the content of Fe can be 30 mole parts or less. The semiconductor ceramic composite powder has a peak with a maximum value near 29° to 31° of an X-ray diffraction pattern, and the halfwidth of that peak can be 0.15 or more. The semiconductor ceramic composite powder can preferably further contain one or more types selected from the group consisting of Co, Ti, and Al. When the total mole amount of Mn and Ni is 100 mole parts, the total of content of Co, Ti, and Al can be 2.0 mole parts or more and 60 mole parts or less. The average particle diameter of the semiconductor ceramic composite powder can be, for example, 2 µm or less, and its specific surface area can be, for example, 2 m²/g or more and 12 m²/g or less. The ratio of volume of the semiconductor ceramic composite powder in the thermistor part is preferably 30 vol% or more and 70 vol% or less. The organic polymeric component can contain thermosetting resin and, preferably, can further contain thermoplastic resin. As the thermosetting resin, for example, one or more resins selected from the group consisting of epoxy resin, epoxy acrylate resin, phenol-novolac-type epoxy resin, phenol resin, urethane resin, silicone resin, polyamide resin, and polyimide resin can be used. As the thermoplastic resin, for example, one or more resins selected from the group consisting of polyvinyl butyral resin, epoxy resin not added with a curing agent, phenoxy resin not added with a curing agent, polyester, and polyvinyl acetate can be used.

In the thermistor part 5 having a positive temperature coefficient (PTC), for example, conductive particles such as nickel or carbon black can be used as the fillers 7, and a thermally-expansive organic polymeric component such as crystalline polyethylene, ethylene-vinyl acetate copolymer, polyvinyl acetate, or polycaprolactone can be used as the organic polymeric component 9.

As the thermistor part 5, one having a negative temperature coefficient (NTC) can be more suitably used to detect (or measure) a temperature with high accuracy, because the resistance value decreases with an increase in temperature while linearity is relatively ensured (refer to Fig. 3(a)). In many of those having a positive temperature coefficient (PTC), with an increase in temperature, the resistance value abruptly increases after a certain temperature as a boundary (refer to Fig. 3(b)). Thus, they can be used to detect (or measure) a temperature, and can be suitably used to detect a specific temperature.

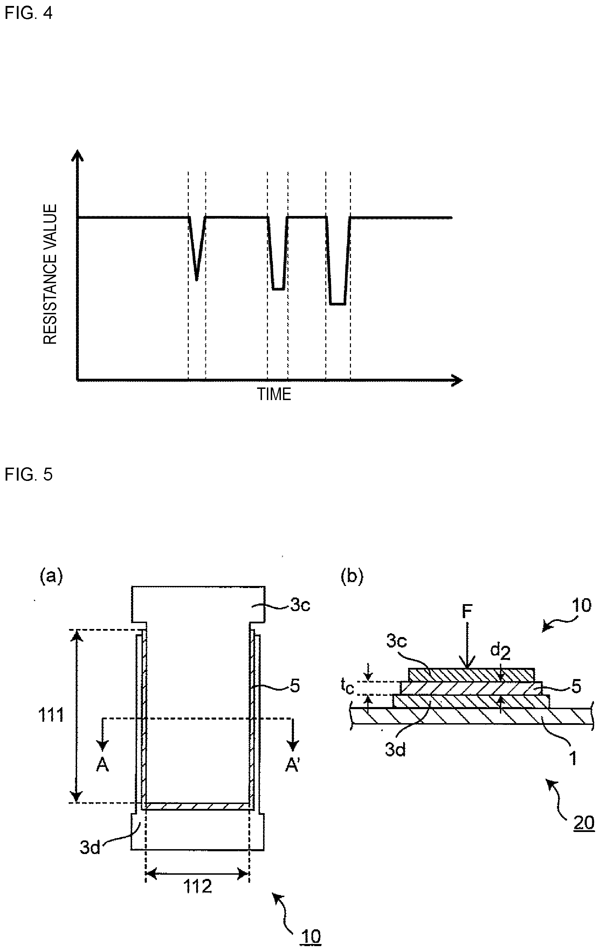

Changes in the resistance value R with the external force F can be brought by occurrence of stress (or distortion) in the thermistor part 5 due to application of the external force F to the thermistor part 5. Schematically, in a case in which the temperature T is constant, with reference to Fig. 4, the measured resistance value R can be constant in accordance with the temperature T when the external force F is not applied, but changes when the external force F is applied (the case in which the resistance value R decreases with the external force F is exemplarily and schematically depicted in Fig. 4, but this is not meant to be restrictive), and can return to the original resistance value when the external force F is removed. Changes in the resistance value can be varied in accordance with the intensity of the external force F applied to the thermistor element (this is referred to in the specification as stress characteristics of the resistance value or R-F characteristics).

The present invention is not constrained by any theory. In the present embodiment (comb-shaped electrodes), it is thought that, when the external force F (for example, refer to Fig. 1(c)) is applied to the thermistor part 5, stress (or distortion) occurs in the thermistor part 5, and the thermistor part 5 is deformed to change the distance d₁ between the electrodes 3a and 3b (refer to Fig. 1(c)), change the distance s between the fillers 7 (refer to Fig. 2), and/or change the covering thickness t_{B} (refer to Fig. 1(c)) when the comb-shaped electrodes 3a and 3b are buried in the thermistor part 5 as in the present embodiment, thereby changing the resistance value R between the electrodes 3a and 3b.

When a pressurizing force is applied as the external force F, the distance d₁ between the electrodes 3a and 3b can increase or decrease, the distance between the fillers 7 can decrease, and/or the covering thickness t_{B} can decrease. In particular, in the present embodiment (comb-shaped electrodes), when a pressurizing force is applied as the external force F in a case in which the base material 1 is relatively rigid (for example, made of glass or the like), the influence of the decrease of the distance between the fillers 7 is large, thereby leading to a tendency that percolation (or conductive path) of the thermistor part 5 is changed to decrease the resistance value. On the other hand, when a pressurizing force is applied as the external force F in a case in which the base material 1 is relatively soft (or flexible) (for example, made of PET or the like), the influence of the deformation of the base material 1 to increase the distance d₁ between the electrodes 3a and 3b is large, thereby leading to a tendency that the resistance value increases.

Thus, it is understood that the resistance value R measured between the two electrodes 3a and 3b of the sensor element 10 changes depending on the temperature T and the external force F and can be represented as an equation R = f(T, F) (where f is any function).

Changes occurring in the resistance value R due to fluctuations in the temperature T and those due to fluctuations in the external force F exhibit different behaviors. Thus, the changes in the resistance value R can be separated into those due to fluctuations in the temperature T and those due to fluctuations in the external force F. This separation can be implemented in any appropriate mode by analyzing and/or learning each of the behaviors of the resistance value R due to fluctuations in the temperature T and due to fluctuations in the external force F (and, if required, due to fluctuations in both) and, if relevant, by modeling (typifying) behaviors of the resistance value R observable in a specific use purpose of the sensor element 10, and so forth. According to the above-described equation expression, the resistance value R = f(F, T) can be separated into an external force component R_{F} = f_{F}(F) and a temperature component R_{T} = f_{T}(T). This separation can be performed by any appropriate electric signal processing (for example, refer to Embodiment 4), but this is not meant to be restrictive.

Thus, while the sensor device 20 of the present embodiment is a single sensor device, it can separate the resistance value into an external force component and a temperature component to detect both of the temperature T and the external force F (or stress/distortion), in other words, it has both of a function as a temperature sensor and a function as an external force (or stress/distortion) sensor.

### (Embodiment 2)

The present embodiment relates to a sensor device having surface electrodes.

As schematically depicted in Fig. 5, the sensor device 20 of the present embodiment includes the base material 1, and the sensor element 10 arranged on the base material 1. The sensor element 10 includes two electrodes 3c and 3d and the thermistor part 5 arranged between the two electrodes 3c and 3d. The sensor device 20 of the present embodiment can have a structure similar to that of Embodiment 1 except that the mode of the two electrodes in the sensor element 10 is different. In the present embodiment, the description in Embodiment 1 can be similarly applied to the present embodiment unless otherwise described.

In the present embodiment, the sensor element 10 is arranged on the base material 1 and is configured to include the two electrodes 3c and 3d and the thermistor part 5. The two electrodes 3c and 3d configure counter electrodes, the thermistor part 5 is arranged between these electrodes 3c and 3d and, preferably, the electrode 3c, the thermistor part 5, and the electrode 3d are laminated. The thermistor part 5 has a thickness t_{c}, which can be, for example, approximately 200 µm or less and whose lower limit is not particularly limited but can typically be approximately 0.1 µm or more.

In the present embodiment, the two electrodes 3c and 3d are surface electrodes as schematically depicted in Fig. 5. More specifically, the electrodes 3c and 3d each have a principal surface substantially parallel to the surface of the base material 1 and opposed to each other. A distance d₂ between the electrodes 3c and 3d (which is equal to the thickness t_{c} of the thermistor part in the depicted example, but is not meant to be restrictive), the area of a portion where the electrodes 3c and 3d are opposed to each other (more specifically, the sizes of a long side 111 and a short side 112 of this opposed portion), and so forth can be selected as appropriate in accordance with the use purpose of the sensor device 20. The two electrodes 3c and 3d are each led from the sensor element 10 to be connected to a wire (not depicted) formed on the base material 1. The lead directions of the electrodes 3c and 3d are not particularly restrictive. The wire may be a circuit pattern form on the base material 1, but this is not meant to be restrictive.

As schematically depicted in Fig. 5, the thermistor part 5 is formed of conductive or semiconductor particles (fillers) 7 and an organic polymeric component 9. The fillers 7 and the organic polymeric component 9 can be selected as appropriate so that the resistance value R measured between the electrodes 3c and 3d changes with temperature T and external force F in accordance with the use purpose of the sensor device (such as, for example, an assumed use temperature range and a mode of application of external force).

The sensor element 10 of the present embodiment can be fabricated as follows, for example. First, the base material 1 and conductive paste (so-called silver paste, copper paste, or the like; but this is not meant to be restrictive) are prepared. Also, thermistor paste is prepared by mixing at least the fillers 7 and the organic polymeric component 9 at a predetermined ratio. Then, on the base material 1, the conductive paste, the thermistor paste, and the conductive paste in this order are sequentially printed with a predetermined pattern. As required, heat treatment may be performed. Preferably, one heat treatment can be performed every time the conductive paste is printed and every time the thermistor paste is printed. With this, the electrodes 3c and 3d are formed from the conductive paste and the thermistor part 5 is formed from the thermistor paste, and the sensor element 10 is thereby fabricated.

The sensor device 20 of the present embodiment detects the external force F applied to the sensor element 10 and the temperature T to which the sensor element 10 is exposed (by extension, temperature of the thermistor part 5), based on the resistance value R measured between the two electrodes 3c and 3d.

As with Embodiment 1, changes in the resistance value R with the temperature T can be determined by the material characteristics of the thermistor part 5.

Changes in the resistance value R with the external force F can be brought by occurrence of stress (or distortion) in the thermistor part 5 due to application of the external force R to the thermistor part 5.

The present invention is not constrained by any theory. In the present embodiment (surface electrodes), it is thought that, when the external force F (for example, refer to Fig. 5(b)) is applied to the thermistor part 5, stress (or distortion) occurs in the thermistor part 5, and the thermistor part 5 is deformed to change the distance d₂ between the electrodes 3c and 3d (refer to Fig. 5(b)) and/or change the distance s between the fillers 7 (refer to Fig. 2), thereby changing the resistance value R between the electrodes 3c and 3d.

When a pressurizing force is applied as the external force F, the distance d₂ between the electrodes 3c and 3d can decrease and/or the distance between the fillers 7 can decrease. In particular, in the present embodiment (surface electrodes), irrespective of the base material 1, the influence of the decrease of the distance d₂ between the electrodes 3c and 3d with respect to the pressurizing force is large, thereby leading to a tendency that the resistance value further decreases. That is, the change ratio of the resistance value with respect to the external force is significantly large.

Thus, as with Embodiment 1, it is understood that the resistance value R measured between the two electrodes 3c and 3d of the sensor element 10 changes depending on the temperature T and the external force F and can be represented as an equation R = f(T, F) (where f is any function).

The sensor device 20 of the present embodiment can achieve effects similar to those of Embodiment 1. Furthermore, according to the sensor device (surface electrodes) of the present embodiment, compared with the sensor device (comb-shaped electrodes) of Embodiment 1, the change ratio of the resistance value with respect to the external force is significantly large, and the external force can be detected with high sensitivity.

### (Embodiment 3)

The present embodiment relates to a sensor device where a plurality of sensor elements are arranged on a base material.

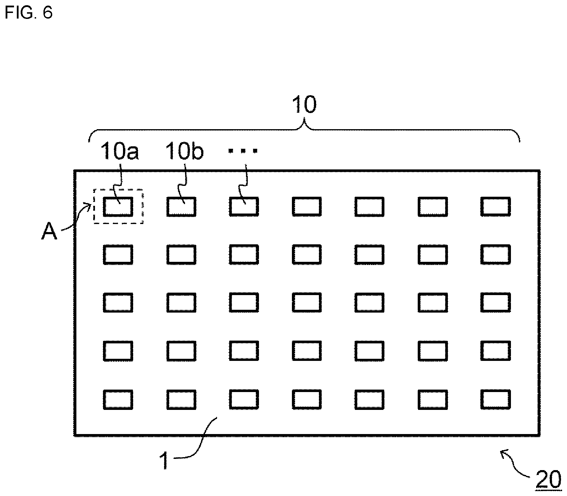

As schematically depicted in Fig. 6, the sensor device 20 of the present embodiment includes the base material 1 and a plurality of sensor elements 10a, 10b, ... arranged on the base material 1. The plurality of sensor elements 10a, 10b, ... are elements independent from one another. For these, resistance values can be respectively measured independently from one another.

The base material 1 itself has electrical insulating properties, and wires (not depicted) are formed thereon so that resistance values can be respectively measured independently from one another for the plurality of sensor elements 10a, 10b, .... The base material 1 may have a single-layer or multilayer structure, and an adhesive layer can be provided as required between the wires and the base material 1.

Each of the plurality of sensor elements 10a, 10b, ... may or may not have a substantially similar structure and, for example, may be the sensor elements 10 described above in Embodiments 1 and 2. In the present embodiment, the description in Embodiments 1 and 2 can be similarly applied to the present embodiment unless otherwise described.

The total number of the plurality of sensor elements 10a, 10b, ... is not particularly limited as long as it is two or more, and can be selected as appropriate in accordance with the use purpose, necessary area, and so forth of the sensor device 20. For example, the plurality of sensor elements 10a, 10b, ... can be arranged with, for example, 5-mm to 50-mm pitches.

The plurality of sensor elements 10a, 10b, ... are preferably arranged in an array shape on the base material 1. The "array shape" means that the plurality of sensor elements 10a, 10b, ... are arranged as being regularly aligned. This allows the position of each of the plurality of sensor elements 10a, 10b, ... to be easily grasped and, furthermore, each distribution of temperatures and external forces (or pressures) can be estimated. For example, as schematically depicted in Fig. 6, the plurality of sensor elements 10a, 10b, ... are preferably arranged in a two-dimensional matrix shape on the base material 1. The "two-dimensional matrix shape" means that the plurality of sensor elements 10a, 10b, ... are arranged with predetermined pitches so as to two-dimensionally form rows and columns. This allows the temperature and the external force to be detected over a two-dimensional plane with substantially equal accuracy and, furthermore, each surface distribution of temperatures and external forces (or pressures) can be estimated. The above-described predetermined pitches may be the same in a row direction and a column direction (that is, a lattice-point shape) or may be varied. As the above-described predetermined pitches are smaller, the temperature and the external force can be detected with higher accuracy and, furthermore, each surface distribution of temperatures and external forces (or pressures) can be estimated. However, the present invention is not meant to be limited to this, and the plurality of sensor elements 10a, 10b, ... can be arranged at any appropriate positions on the base material 1 as long as the positions of the plurality of sensor elements 10a, 10b, ... can be grasped.

In each of the plurality of sensor elements 10a, 10b, ..., it is understood that, as with Embodiments 1 and 2, the resistance value R measured between two electrodes changes depending on the temperature T and the external force F and can be represented as an equation R = f(T, F) (where f is any function). That is, according to the sensor device 20 of the present embodiment, for the plurality of sensor elements 10a, 10b, ..., resistance values Rₐ, R_{b}, ... are respectively measured independently from one another, and thus a plurality of equations Rₐ = f(Tₐ, Fₐ), R_{b} = f(Tₐ, Fₐ), ... are acquired.

The sensor device 20 of the present embodiment can achieve effects similar to those of Embodiments 1 and 2. Furthermore, by combining information about the position grasped for each of the plurality of sensor elements 10a, 10b, ..., changes in the resistance value R can be separated into those due to fluctuations in the temperature T and those due to fluctuations in the external force F.

Furthermore, according to the sensor device 20 of the present embodiment, since the plurality of sensor elements 10a, 10b, ... are arranged in an array shape, each distribution of temperatures and external forces (or pressures) can be estimated. In addition, according to the sensor device 20 of the present embodiment, since the plurality of sensor elements 10a, 10b, ... are preferably arranged in a two-dimensional matrix shape, it is possible to detect the temperature and the external force over a two-dimensional plane with substantially equal accuracy and further estimate each surface distribution of temperatures and external forces (or pressures).

### (Embodiment 4)

The present embodiment relates to a sensor system including a sensor device.

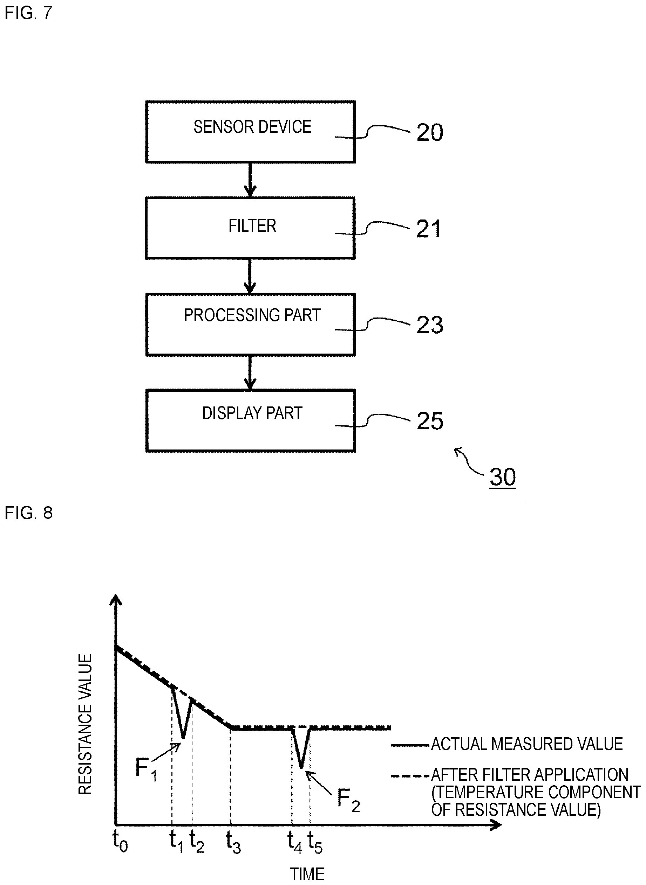

As schematically depicted in Fig. 7, a sensor system 30 of the present embodiment is configured to include the sensor device 20, a filter 21, and a processing part 23 and, as required, further include a display part 25, and these are electrically connected so that electrical signals are passed in this sequence.

The sensor device 20 is a sensor device of the present invention and can be similar to the sensor devices described above in Embodiments 1 to 3. In the present embodiment, the description in Embodiments 1 to 3 can be similarly applied to the present embodiment unless otherwise described. Also, as will be described further below in Embodiment 5, while the sensor device 20 can be used as being arranged in contact with a detection-target object, this is not meant to be restrictive, and the sensor device 20 can be used in any appropriate mode as long as it detects an external force applied to the sensor element and a temperature to which the sensor element is exposed.

In the sensor device 20, the resistance value R is measured for the sensor element 10. In the sensor device 20, when the plurality of sensor elements 10a, 10b, ... are present, resistance values Rₐ, R_{b}, ... are respectively measured independently from one another. In the following, a measurement value of this resistance value R (also including the case of Rₐ, R_{b}, ...) is also simply referred to as an "actual measured value" in the specification. The resistance value R can be measured in a time-elapsed manner (typically, the resistance value R can be measured at constant time intervals, but this is not meant to be restrictive, and the resistance value R can be measured, for example, over continuous time) or may be measured at any appropriate timing in a non-time-elapsed manner. An electrical signal with the actual measured value of the resistance value R acquired as described above can be understood as a function of time (corresponding to time when measurements are performed in a time-elapsed manner by using one or plurality of sensor elements) and/or position (corresponding to each position when measurements are performed in a time-elapsed manner or in a non-time-elapsed manner by using a plurality of sensor elements).

The filter 21 extracts an external force component R_{F} and a temperature component R_{T} from the electrical signal of the actual measured value of the resistance value R acquired by the sensor device 20. Schematically, the resistance value R = f(F, T) is separated into the external force component R_{F} = f_{F}(F) and the temperature component R_{T} = f_{T}(T). This filter 21 may be, for example, a low pass filter and may be a two-dimensional low pass filter when a plurality of sensor elements are present.

Depending on the use purpose of the sensor element, as one example, a case is described in which it is assumed that, while the temperature to which the sensor element can be exposed fluctuates relatively mildly with respect to time, the external force that can be applied to the sensor element (the external force may be normally zero or may not be zero) relatively abruptly changes with respect to time. In this case, in the actual measured value acquired by measuring the resistance value R in a time-elapsed manner by using one sensor element, mild fluctuations with respect to time are understood as being due to fluctuations in the temperature T, and abrupt fluctuations with respect to time are understood as being due to fluctuations in the external force F. A threshold which separates these can be set in advance by any appropriate method. And, at the time of use of the sensor device 20, when an electrical signal of the actual measured value (which is a function of time) acquired by measuring the resistance value R in a time-elapsed manner by using one sensor element is inputted into a low pass filter, an electrical signal indicating a temporally-abrupt change exceeding a certain criterion attenuates, and an electrical signal with its change being below the criterion is outputted. The electrical signal (output) after filter application is regarded as a temperature component of the resistance value, and the result acquired by subtracting the temperature component from the original actual measured value is regarded as an external force component of the resistance value (the electrical signal of thus acquired temperature component and external force component is a function of time). For example, as depicted in Fig. 8, when the temperature mildly increases in a period from t₀ to t₃ and is substantially constant in a period after t₃ and when application of an external force F₁ starts at t₁ and ends at t₂ and application of an external force F₂ starts at t₄ and ends at t₅, the actual measured value of the resistance value R is as indicated by a solid line, and the temperature component of the resistance value acquired by low pass filter application is as indicated by a dotted line (in the drawing, the solid line and the dotted line can overlap at a linear part, but are slightly shifted for viewability. Although not depicted, the external force component of the resistance value is calculated by subtracting the temperature component from the original actual measured value). Note that when a plurality of sensor elements are present, it is possible to perform, for each sensor element, operation of extracting the external force component RF and the temperature component RT from the electrical signal of the actual measured value of this resistance value R (the electrical signal of the temperature component and the external force component acquired from above is a function of time and position). However, the present embodiment is not limited to this. For example, the electrical signal of the actual measured value of the resistance value may be inputted to a high pass filter and the electrical signal (output) after filter application may be regarded as an external force of the resistance value and the one acquired by subtracting the temperature component from the original actual measured value may be regarded as a temperature component of the resistance value.

Also, as another example, while the temperature to which the sensor element can be exposed fluctuates relatively mildly with respect to time, when the external force that can be applied to the sensor element (the external force may be normally zero or may not be zero) is assumed to periodically change with respect to time, as with the above except that a low pass filter in accordance with that temporal period is used, the external force component RF and the temperature component RT can be extracted from the electrical signal of the actual measured value of the resistance value R.

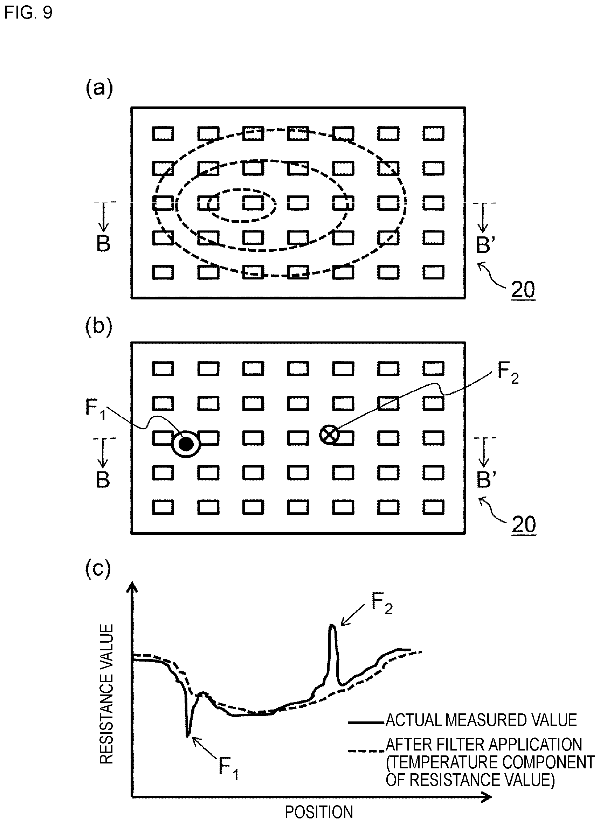

Furthermore, as another example, a case is described in which it is assumed that, while the temperature to which the sensor element can be exposed fluctuates relatively mildly with respect to position, the external force that can be applied to the sensor element (the external force may be normally zero or may not be zero) relatively abruptly changes with respect to position (in other words, the external force is local). In this case, in the actual measured values acquired by measuring the resistance values Rₐ, R_{b}, ... by using a plurality of sensor elements with respect to the positions of the respective sensor elements, mild fluctuations with respect to position (or spatially mild fluctuations) are understood as being due to fluctuations in the temperature T, and abrupt fluctuations with respect to position are understood as being due to fluctuations in the external force F. A threshold which separates these can be set in advance by any appropriate method. And, at the time of use of the sensor device 20, when an electrical signal of each actual measured value (which is a function of position) acquired by measuring the resistance values Rₐ, R_{b}, ... with respect to the positions by using the plurality of sensor elements is inputted into a two-dimensional low pass filter, an electrical signal indicating a positionally-abrupt change exceeding a certain criterion attenuates, and an electrical signal with its change being below the criterion is outputted. The electrical signal (output) after filter application is regarded as a temperature component of the resistance value, and the result acquired by subtracting the temperature component from the original actual measured value is regarded as an external force component of the resistance value (the electrical signal of thus acquired temperature component and external force component is a function of position). For example, as depicted in Fig. 9(a), the temperature mildly increases toward smaller circles indicated by isothermal lines (indicated by dotted lines in the drawing) and, as depicted in Fig. 9(b), when the external forces F₁ and F₂ are locally applied so as to be oriented oppositely to each other with respect to the detection surface of the sensor device 20, the actual measured value of the resistance value R is as indicated by a solid line on, for example, a line along B-B' of Fig. 9(a) and Fig. 9(b) (as appropriate, the position between adjacent sensor elements can be interpolated and/or corrected as appropriate), and the temperature component of the resistance value acquired by application of the two-dimensional low pass filter is as indicated by a dotted line (although not depicted, the external force component of the resistance value is calculated by subtracting the temperature component from the original actual measured value). However, the present embodiment is not limited to this. For example, the electrical signal of the actual measured value of the resistance value may be inputted to a two-dimensional high pass filter and the electrical signal (output) after filter application may be regarded as an external force of the resistance value and the one acquired by subtracting the temperature component from the original actual measured value may be regarded as a temperature component of the resistance value.

In the above manner, in the filter 21, the external force component and the temperature component are extracted from the electrical signal of the actual measured value of the resistance value. The electrical signal of thus acquired external force component and temperature component (function of time and/or position) is sent to the processing part 23, with reference to Fig. 7 again.

The processing part 23 functions so as to acquire the detection result of the external force based on the external force component and acquire the detection result of temperature based on the temperature component. More specifically, the processing part 23 can include a processor, and calculates, from the external force component, the presence or absence of an external force and if the external force is present, its strength, based on stress characteristics (R-F characteristics) of the resistance value, and calculates, from the temperature component, the temperature based on the thermistor characteristics (R-T characteristics). The R-F characteristics and the R-T characteristics can vary in accordance with the sensor device 20 for use, and data regarding these characteristics is stored in advance in a memory that can be present inside or outside the processing part 23. From the detection results of the external force and the temperature, the external force and the temperature can be respectively estimated. When a plurality of sensor elements are present, distributions, preferably, surface distributions, of external forces and temperatures can be estimated.

Thus acquired detection results of the external force and the temperature can be displayed on the display part 25 as required. The display part 25 can be any appropriate display, monitor, or the like.

Thus, the sensor system 30 of the present embodiment includes the sensor device 20, and the resistance value measured by the sensor device 20 is separated by electrical signal processing into an external force component and a temperature component to allow the temperature and the external force to be detected.

### (Embodiment 5)

The present embodiment relates to an article including the sensor device or the sensor system.

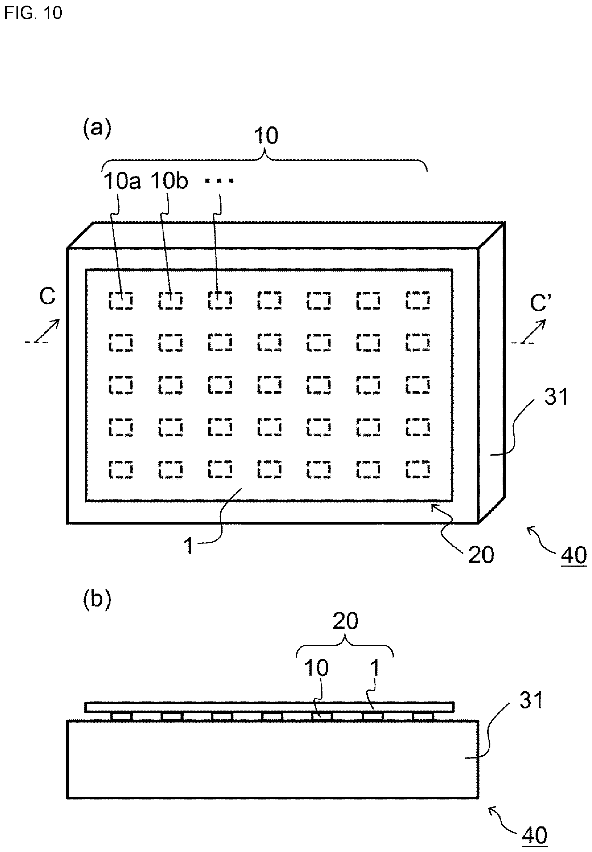

As schematically depicted in Fig. 10, an article 40 of the present embodiment includes the sensor device 20 or the sensor system 30 (not depicted in Fig. 10) including the sensor device 20, and a detection-target object 31, and the sensor device 20 is arranged in contact with the detection-target object 31.

The sensor device 20 is a sensor device of the present invention and can be similar to the sensor devices described above in Embodiments 1 to 3. Note that while a case is exemplarily described in which the sensor device 20 includes the plurality of sensor elements 10a, 10b, ... as the sensor elements 10 in Fig. 10, the number of sensor elements 10 may be one. In the present embodiment, the description in Embodiments 1 to 3 can be similarly applied to the present embodiment unless otherwise described.

Alternatively, the sensor system 30 including the sensor device 20 is a sensor system of the present invention and can be similar to the sensor system described above in Embodiment 4. In the present embodiment, the description in Embodiment 4 can be similarly applied to the present embodiment unless otherwise described.

The detection-target object 31 can be any appropriate article whose temperature and external force (in the specification, the "external force of the detection-target object" may be an external force occurring from the detection-target object, an external force to be applied to the detection-target object, or a combination of these, and the same goes for the following) are desired to be detected.

In the article 40 of the present embodiment, the temperature of the detection-target object 31 propagates to the sensor element 10 (or 10a, 10b, ...) of the sensor device 20, the temperature of the detection-target object 31 can be detected by the sensor device 20. Also, in the article 40 of the present embodiment, when an external force is applied to the sensor element 10 (or 10a, 10b, ...) of the sensor device 20, the external force on the detection-target object 31 can be detected by the sensor device 20. Furthermore, when the plurality of sensor elements 10a, 10b, ... are present, distributions, preferably, surface distributions, of respective temperatures and external forces (or pressures) of the detection-target object 31 can be estimated.

Thus, according to the article 40 of the present embodiment, the temperature and the external force on the detection-target object 31 can be detected by the single sensor device 20. When the article 40 of the present embodiment includes the sensor system 30 including the sensor device 20, the temperature and the external force can be detected by separating the resistance value measured by the sensor device 20 into an external force component and a temperature component by electrical signal processing.

Although the following does not restrict the present embodiment, when the temperature of the detection-target object 31 and the external force caused therefrom are desired to be detected, the sensor device 20, preferably the sensor element 10 (or 10a, 10b, ...), can be arranged so as to be in contact (preferably, close contact) with a surface of the detection-target object 31 directly or, if that surface is conductive, via an electrically-insulating layer or member. In this case, a surface opposite to the base material 1 of the sensor element 10 (or 10a, 10b, ...) of the sensor device 20 configures a detection surface. For example, if the surface of the detection-target object 31 in contact with the sensor device 20 is partially deformed due to some reason, the external force is applied from that deformed portion of the detection-target object 31 to the sensor element 10 in contact with this, thereby allowing deformation of the detection-target object 31 to be detected. The sensor element 10 (or 10a, 10b, ...) can be affixed to the surface of the detection-target object 31 with, for example, an adhesive agent or the like, but this is not meant to be restrictive.

The detection-target object 31 may be, for example, a battery cell and, in particular, a secondary battery for use as being repeatedly charged and discharged. In this case, the temperature and deformation of the battery cell (in some cases, a temperature distribution and a distortion distribution), for example, temperature anomaly (overheating) and anomalous deformation, can be detected. The mode of the battery cell (secondary battery) may be, although not particularly limited, for example, of a laminate type (any electrolyte can be used such as, for example, gel polymer or electrolytic solution), a can type (which can include a rectangular shape, a cylindrical shape, and so forth), or the like.

The article 40 of the present embodiment may include a plurality of detection-target objects 31, and the sensor device 20 may be arranged in contact with each of these. For example, the article of the present embodiment can be used in combination with a battery management system (BMS) for a battery stack (battery pack) with a plurality of battery cells (single battery cells) connected thereto. With this, for each of the plurality of battery cells, the temperature and deformation (more specifically, a temperature distribution and a distortion distribution) can be detected, allowing the battery stack to be used more safely with a long life.

However, the article of the present embodiment is not limited to the case in which a battery cell is used as a detection-target object. For example, in induction heating cookware, the article can be used to detect the temperature and the external force on a top plate where a heating-target object (for example, a pan or the like) is placed. With this, the size and temperature of the heating-target object placed on the top plate can be grasped and cooking can be performed efficiently with the heating-target object at an appropriate temperature without wasteful area heating. Also, for example, in a toilet seat, seat, mat, carpet, or the like having a heater function, the article can be used to detect the temperature and the external force on a surface portion to be used by a user. With this, it is possible to grasp the presence of the user and the temperature of an area where the user is present to control the heater function efficiently and at an appropriate temperature. It is also possible to stop the heater function when anomalous deformation is detected. Furthermore, for example, in a tank which can accommodate a liquid, the article can be used to detect the temperature and the external force (the presence or absence of pressure from the liquid, that is, boundary) on an inner surface in contact with the liquid. With this, it is possible to measure the temperature of the liquid and the position (liquid-surface level) of the liquid surface.

### (Modification)

The present modification relates to a sensor device having a heater function, or a sensor system and article including this sensor device having the heater function. In the present embodiment, the description in Embodiments 1 to 5 can be similarly applied to the present modification unless otherwise described.

The sensor devices of Embodiments 1 to 3 described above detect, based on the resistance value measured between two electrodes, the external force applied to the sensor element and the temperature to which the sensor element is exposed (in turn, the temperature of the thermistor part). By contrast, the sensor device of the present modification has a heater function, and detects the external force applied to the sensor element.

The sensor device of the present modification can have a structure similar to that of the sensor devices of Embodiments 1 to 3, except that the thermistor part has a positive temperature coefficient (PTC) (PTC thermistor).

That is, the sensor device of the present modification can be written as follows:
The sensor device including:
a base material; and
a sensor element arranged on the base material, in which
the sensor element
   includes two electrodes and a thermistor part arranged between the two electrodes, formed of conductive or semiconductor particles and an organic polymeric component, and having a positive temperature coefficient, and
   is capable of heating by applying current or voltage to the thermistor part and detects an external force applied to the sensor element based on a resistance value measured between the two electrodes.

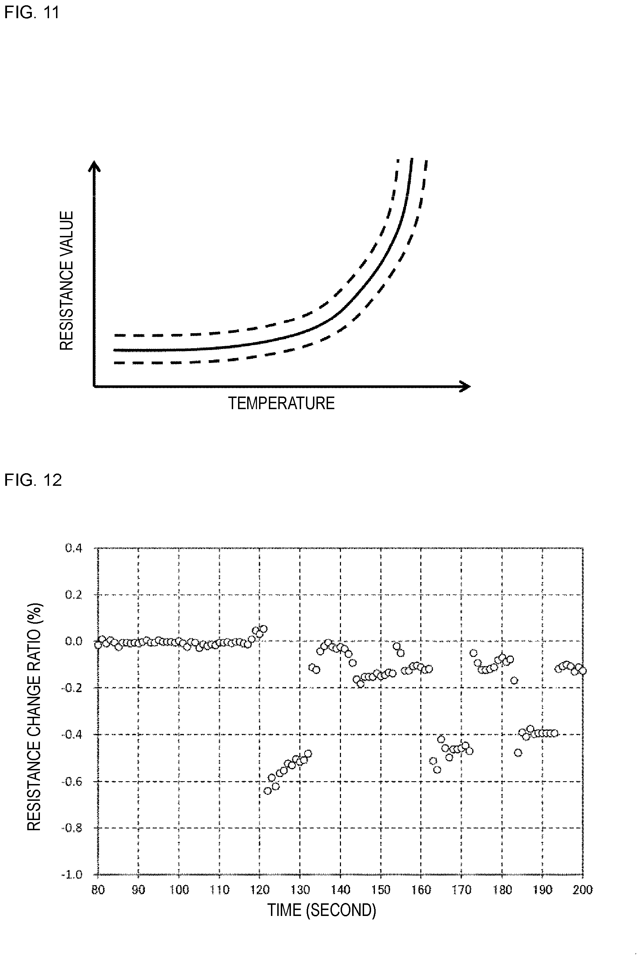

This sensor device is capable of heating by applying current or voltage to the thermistor part, that is, has a heater function, and detects an external force applied to the sensor element. More specifically, the sensor device of the present modification exhibits PTC thermistor characteristics (R-T characteristics) indicated by a solid line in Fig. 11 in a state in which no external force is applied (when the external force F is zero) but, when an external force is applied, the resistance value changes from these R-T characteristics (reference characteristics) and can exceed, for example, thresholds indicated by dotted lines in Fig. 11. Thus, when the resistance value R changes as exceeding the thresholds, it can be determined that this is due to fluctuations in the external force F. And, for the same reason as those described above in Embodiments 1 to 3, the changes in the resistance value R can be separated into those due to fluctuations in the temperature T and those due to fluctuations in the external force F. Thus, from the resistance value R = f(F, T), the external force component R_{F} = f_{F}(F) can be separated and acquired.

The sensor system of the present modification can be written as follows:
The sensor device including:
the sensor device of the present modification;
a control part which controls current or voltage to be applied to the thermistor part;
a filter which extracts an external force component from an electrical signal of the resistance value measured for the sensor element; and
a processing part which acquires a detection result of an external force based on the external force component, in which
the control part further controls the current or the voltage to be applied to the thermistor part based on the detection result of the external force.

According to the sensor system of the present modification, the sensor device can be made function as a heater and, when an external force is detected therein, the heater function can be controlled.

The article of the present modification can be written as follows:
The article including:
the sensor device or sensor system of the present modification; and
a detection-target object, in which
the sensor device is arranged in contact with the detection-target object.

The detection-target object may be, for example, a battery cell and, in particular, a secondary battery for use as being repeatedly charged and discharged. In this case, deformation of the battery cell (in some cases, a distortion distribution), for example, anomalous deformation, can be detected. Also, with the heater function, the battery cell can be pre-heated, and the battery cell can be heated in cold climate areas or the like.

The article of the present modification can be used in combination with a battery management system (BMS) for a battery stack (battery pack) with a plurality of battery cells (single battery cells) connected thereto. With this, for each of the plurality of battery cells, deformation (in some cases, a distortion distribution) can be detected, and also the battery cells can be heated (preferably, heating can be controlled), allowing the battery stack to be used more safely with a long life.

However, the article of the present embodiment is not limited to the case in which a battery cell is used as a detection-target object. For example, in a toilet seat, seat, mat, carpet, or the like, the article provides a heater function and can be used to detect the external force on a surface portion to be used by a user. With this, it is possible to control the heater function to efficiently and appropriately heat the presence of the user and an area where the user is present. It is also possible to stop the heater function when anomalous deformation is detected.

### EXAMPLES

### (Example 1)

The present example relates to the sensor device (comb-shaped electrode) of Embodiment 1.

The sensor device 20 (comb-shaped electrode; refer to Fig. 1) described above in Embodiment 1 was fabricated under the following conditions. In the sensor device 20 of the present example, the thermistor part 5 was assumed to have a negative temperature coefficient (NTC).
Material of the base material 1: glass
Thickness of the base material 1: approximately 0.7 mm
Material of the electrodes 3a and 3b: Ag paste burned substance
Height h of the electrodes 3a and 3b: approximately 10 µm
Width w of the electrodes 3a and 3b: approximately 50 µm
Inter-electrode distance d₁ between the electrodes 3a and 3b: approximately 50 µm
Long side 101 formed by the electrodes 3a and 3b: approximately 2.5 mm
Short side 102 formed by the electrodes 3a and 3b: approximately 1.5 mm
Fillers 7 in the thermistor part 5: spinel-type semiconductor ceramic composite powder containing Mn, Ni, and Fe (more specifically, Mn, Ni, Fe, and Co)
Average particle diameter of the fillers 7 in the thermistor part 5: approximately 1 µm
Organic polymeric component 9 in the thermistor part 5: phenol resin
Content ratio of the fillers 7 in the thermistor part 5: approximately 46 volume%
Thickness t_{A} of the thermistor part 5: approximately 30 µm
Dimensions of the upper surface (pressurized surface) of the thermistor part 5: rectangular shape with 4.6 mm in length and 3.2 mm in width

More specifically, with reference to Fig. 1, the sensor device 20 of the present example was fabricated as follows (as for the fillers 7, the description in International Publication No. 2017/022373 was referred to).

First, printing was performed by screen printing on the base material 1 with commercially-available Ag paste containing silver particles (REXALPHA series manufactured by TOYOCHEM CO., LTD.) and was subjected to a heat treatment under an air atmosphere at 130°C for 30 minutes to form the comb-shaped electrodes 3a and 3b as depicted in Fig. 1(a). Details of the base material 1 and the electrodes 3a and 3b are as described above. With this, the base material 1 with the electrodes 3a and 3b formed thereon was prepared.

Meanwhile, thermistor paste was formulated. First, as a ceramic element material, powder of each of Mn₃O₄, NiO, Fe₂O₃, and Co₃O₄ were weighted in a composition in which the ratio of Mn:Ni:Fe:Co is 70:30:20:8 (mol%) (corresponding to Example 28 described in International Publication No. 2017/022373) to acquire a raw-material mixture. Next, this raw-material mixture was poured into a ball mill and was subjected to sufficient wet crushing with a crushing medium made of zirconia. The crushed raw-material mixture was subjected to a heat treatment at 730°C for two hours to acquire a semiconductor ceramic composite. The acquired semiconductor ceramic composite, pure water, and cobblestones having a diameter of 2 mm were poured into a 1 L polyethylene pot, and were crushed by a ball-mill method at 110 rpm for four hours. Slurry and the cobblestones after crushing were separated through a mesh, the slurry was poured onto a hot plate to remove moisture. Furthermore, coarse particles were removed through a mesh, and the aggregate was shredded for granulation. Next, drying was performed at a temperature of 80°C for 24 hours to acquire semiconductor ceramic composite powder (average particle diameter of approximately 1 µm). This semiconductor ceramic composite powder had a peak (peak of (220 surface)) near 29° to 31° corresponding to (220) surface of the spinel-type crystal structure as a result of XRD measurement, and the halfwidth of that peak was 0.184. Thus acquired semiconductor ceramic composite powder was spinel-type semiconductor ceramic composite powder containing Mn, Ni, Fe, and Co, and was used as the fillers 7. These fillers 7 (semiconductor ceramic composite powder), the organic polymeric component 9 (phenol resin), and a solvent (dipropylene glycol methylether acetate (DPMA)) were blended in a mortar to acquire thermistor paste. The solvent added had an amount of approximately 25 wt% of the total weight of the fillers 7 and the organic polymeric component 9.

On the above-prepared base material 1 having formed thereon the electrodes 3a and 3b, this thermistor paste was printed by screen printing, was dried under an air atmosphere at 80°C for ten minutes, and was then subjected to a heat treatment at 150°C for one hour to form the thermistor part 5 as depicted in Fig. 1(b). Details of the thermistor part 5 are as described above.

With this, the sensor device 20 of the present example was fabricated.

Then, under an environment at room temperatures, a constant current was let flow between the two electrodes 3a and 3b led from the sensor element 10 in the sensor device 20 of the present example, and a resistance value therebetween was measured at constant time intervals over a period of 0 to 200 seconds on the condition of substantially constant temperature. Of this measurement period, no external force was applied for first 0 to 120 seconds, and then application and removal of the external force was repeated at every ten seconds (that is, the external force was applied in each of periods from 120 to 130 seconds, 140 to 150 seconds, 160 to 170 seconds, and 180 to 190 seconds). The application and removal of the external force was performed by gripping a rectangular-parallelepiped pressurizing member (dimensions of the pressurization surface: rectangular shape with 8.0 mm in length and 5.0 mm in width) made of silicone rubber by a support member, pressing the pressurizing member to a substantially vertical direction to apply a pressuring force (or apply a load) to the upper surface of the sensor element 10 formed on the base material 1, and then returning the pressurizing member to a reverse direction.

A graph in which change ratios of the resistance value measured as above are plotted with respect to time is depicted in Fig. 12. As understood from Fig. 12, the resistance value decreased at a change ratio of approximately 0.6% substantially correspondingly to the period of applying the external force (pressurizing force) and, when the external force was removed, the resistance value was returned near the original resistance value. From this, it was confirmed that the resistance value in the sensor device 20 of the present example is changed by application of the external force.

### (Example 2)

The present example relates to the sensor device (surface electrode) of Embodiment 2.

The sensor device 20 (surface electrode; refer to Fig. 5) described above in Embodiment 2 was fabricated under the following conditions. In the sensor device 20 of the present example, the thermistor part 5 was assumed to have a negative temperature coefficient (NTC).
Material of the base material 1: PET
Thickness of the base material 1: approximately 0.05 mm
Material of the electrodes 3c and 3d: Ag paste burned substance
Inter-electrode distance d₂ between the electrodes 3c and 3d: approximately 15 µm

Long side 111 of a portion opposed to the electrode 3c, 3d: approximately 8 mm
Short side 112 of a portion opposed to the electrode 3c, 3d: approximately 5 mm
   Fillers 7 in the thermistor part 5: spinel-type semiconductor ceramic composite powder containing Mn, Ni, and Fe (more specifically, Mn, Ni, Fe, and Co)
   Average particle diameter of the fillers 7 in the thermistor part 5: approximately 1 µm
   Organic polymeric component 9 in the thermistor part 5: phenol resin
   Content ratio of the fillers 7 in the thermistor part 5: approximately 46 volume%
   Thickness t_{c} of the thermistor part 5: approximately 15 µm
   Dimensions of the upper surface (pressurized surface) of the thermistor part 5: rectangular shape with 8.0 mm in length and 5.0 mm in width

More specifically, with reference to Fig. 5, the sensor device 20 of the present example was fabricated as follows.

On the base material 1, printing was performed with Ag paste into a pattern corresponding to the electrode layer 3d and was subjected to a heat treatment under an air atmosphere at 130°C for 30 minutes. Next, printing was performed with thermistor paste into a pattern corresponding to the thermistor part 5 and was subjected to a heat treatment under an air atmosphere at 150°C for one hour. On that, printing was performed with Ag paste into a pattern corresponding to the electrode layer 3c and was subjected to a heat treatment under an air atmosphere at 130°C for 30 minutes. The Ag paste and the thermistor paste used were similar to those of Example 1, and details of the base material 1, the electrodes 3c and 3d, and the thermistor part 5 are as described above.

With this, the sensor device 20 of the present example was fabricated.

Then, under an environment at room temperatures, a constant current was let flow between the two electrodes 3a and 3b led from the sensor element 10 in the sensor device 20 of the present example, and a resistance value therebetween was measured at constant time intervals over a period of 0 to approximately 120 seconds on the condition of substantially constant temperature. Of this measurement period, no external force was applied for first 0 to 15 seconds, and then application and removal of the external force was repeated at every ten seconds (that is, the external force was applied in each of periods from 15 to 25 seconds, 35 to 45 seconds, 55 to 65 seconds, 75 to 85 seconds, and 95 to 105 seconds). The application and removal of the external force was performed by gripping a pressurizing member similar to that of Example 1 by a support member, pressing the pressurizing member to a substantially vertical direction to apply a pressurizing force (or apply a load) to the upper surface of the sensor element 10 formed on the base material 1, and then returning the pressurizing member to a reverse direction.

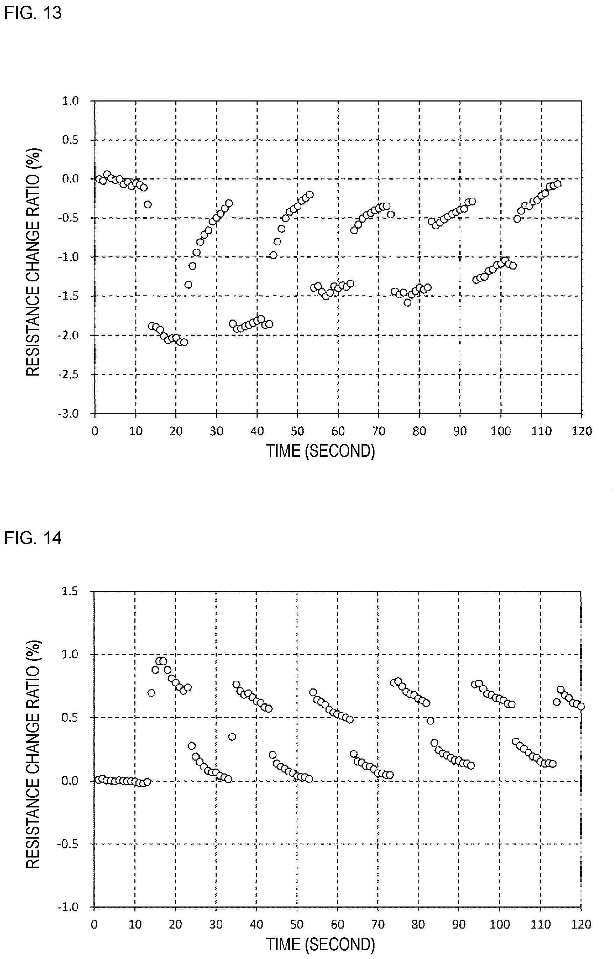

A graph in which change ratios of the resistance value measured as above are plotted with respect to time is depicted in Fig. 13. As understood from Fig. 13, the resistance value significantly decreased at a change ratio of approximately 2% to 1% substantially correspondingly to the period of applying the external force (pressurizing force) and, when the external force was removed, the resistance value was returned near the original resistance value. From this, it was confirmed that the resistance value in the sensor device 20 of the present example is changed by application of the external force.

### (Reference Example)

The present reference example relates to the sensor device (comb-shaped electrode) of the modification.

As the sensor device described above as the modification, one having a structure similar to that of the sensor device 20 (comb-shaped electrode; refer to Fig. 1) described above in Embodiment 1 was fabricated. However, in the sensor device of the present reference example, the thermistor part was assumed to have a positive temperature coefficient (PTC). As a material having a positive temperature coefficient (PTC), a known material acquired by combining conductive fillers and a crystalline resin material as appropriate so as to exhibit a positive temperature coefficient (PTC) can be used. As this conductive fillers, for example, carbon, Ni, or the like can be used. Also, as a crystalline resin material, for example, polycaprolactone, polyvinyl acetate, ethylene-vinyl acetate copolymer resin, polyethylene, or the like can be used.

Then, under an environment at room temperatures, while a current was let flow between the two electrodes led from the sensor element in the sensor device of the reference example to heat the sensor element, the resistance value between these electrodes was measured at constant time intervals over a period of 0 to approximately 120 seconds. Of this measurement period, no external force was applied for first 0 to 15 seconds, and then application and removal of the external force was repeated at every ten seconds (that is, the external force was applied in each of periods from 15 to 25 seconds, 35 to 45 seconds, 55 to 65 seconds, 75 to 85 seconds, and 95 to 105 seconds). The application and removal of the external force was performed by gripping a pressurizing member similar to that of Example 1 by a support member, pressing the pressurizing member to a substantially vertical direction to apply a pressuring force (or apply a load) to the upper surface of the sensor element 10 formed on the base material 1, and then returning the pressurizing member to a reverse direction.

A graph in which change ratios of the resistance value measured as above are plotted with respect to time is depicted in Fig. 14. As understood from Fig. 14, the resistance value increased at a change ratio of approximately 1% to 0.5% substantially correspondingly to the period of applying the external force (pressurizing force) and, when the external force was removed, the resistance value was returned near the original resistance value. From this, it was confirmed that the resistance value in the sensor element of the present reference example is changed by application of the external force.

### Industrial Applicability

The sensor device and the article and the sensor system including the same of the present invention can be used for a wide range of various use purposes in which the external force and the temperature are desired to be detected, for example, in a BMS, cookware, a toilet seat or the like having a heater function, a tank which can accommodate a liquid, and others.

The present application claims the benefit of priority based on Japanese Patent Application No. 2019-102308 filed in Japan on May 31, 2019.

### Reference Signs List

1 base material
3a, 3b electrode (comb-shaped electrode)
3c, 3d electrode (surface electrode)
5 thermistor part
7 conductive or semiconductor particles (fillers)
9 organic polymeric component
10, 10a, 10b, ... sensor element
20 sensor device
21 filter
23 processing part
25 display part
30 sensor system
31 detection-target object
40 article

## Claims

1. A sensor system (30) comprising:
a sensor device (20) comprising:
a base material (1); and
a sensor element (10, 10a, 10b) arranged on the base material (1), wherein the sensor element (10, 10a, 10b) includes two electrodes (3a, 3b, 3c, 3d) and a thermistor part (5) arranged between the two electrodes (3a, 3b, 3c, 3d) and formed of conductive or semiconductor particles (7) and an organic polymeric component (9);
a filter (21) configured to extract from an electrical signal of the resistance value measured for the sensor element (10, 10a, 10b) relatively abrupt fluctuations with respect to time as an external force component and relatively mild fluctuations with respect to time as a temperature component, wherein the relatively abrupt fluctuations and the relatively mild fluctuations are separated by a threshold; and
a processing part (23) which is configured to acquire a detection result of an external force based on the external force component and to acquire a detection result of temperature based on the temperature component;
wherein the sensor system (30) is configured to, based on a resistance value measured between the two electrodes (3a, 3b, 3c, 3d), detect an external force applied to the sensor element (10, 10a, 10b) and a temperature to which the sensor element (10, 10a, 10b) is exposed.

2. The sensor system (30) according to Claim 1, wherein the two electrodes (3a, 3b) are comb-shaped electrodes (3a, 3b) or surface electrodes (3c, 3d).

3. The sensor system (30) according to claim 1 or 2,
wherein the thermistor part (5) has a negative temperature coefficient and/or wherein the base material (1) has flexibility.

4. The sensor device (20) according to any one of Claims 1 to 3, wherein a plurality of said sensor elements (10, 10a, 10b) are arranged on the base material (1).

5. The sensor device (20) according to Claim 4, wherein the plurality of sensor elements (10, 10a, 10b) are arranged on the base material (1) in an array shape.

6. An article comprising:
the sensor system according to any one of Claims 1 to 5; and
a detection-target object (31), wherein
the sensor device (20) is arranged in contact with the detection-target object (31).

7. The article (40) according to Claim 6, wherein the detection-target object (31) is a battery cell.

## Patentansprüche

1. Ein Sensorsystem (30), das folgende Merkmale aufweist:
eine Sensorvorrichtung (20), die folgende Merkmale aufweist:
ein Basismaterial (1); und
ein Sensorelement (10, 10a, 10b), das auf dem Basismaterial (1) angeordnet ist, wobei das Sensorelement (10, 10a, 10b) zwei Elektroden (3a, 3b, 3c, 3d) und ein Thermistorteil (5) aufweist, das zwischen den zwei Elektroden (3a, 3b, 3c, 3d) angeordnet ist und aus leitfähigen oder Halbleiterpartikeln (7) und einer organischen Polymerkomponente (9) gebildet ist;
ein Filter (21), das dazu konfiguriert ist, aus einem elektrischen Signal des Widerstandswerts, der für das Sensorelement (10, 10a, 10b) gemessen wird, relativ abrupte Schwankungen in Bezug auf die Zeit als eine externe Kraftkomponente und relativ milde Schwankungen in Bezug auf die Zeit als eine Temperaturkomponente zu extrahieren, wobei die relativ abrupten Schwankungen und die relativ milden Schwankungen durch einen Schwellenwert getrennt sind; und
ein Verarbeitungsteil (23), das dazu konfiguriert ist, ein Erfassungsergebnis einer externen Kraft basierend auf der externen Kraftkomponente zu erfassen und ein Erfassungsergebnis der Temperatur basierend auf der Temperaturkomponente zu erfassen;
wobei das Sensorsystem (30) dazu konfiguriert ist, basierend auf einem Widerstandswert, der zwischen den zwei Elektroden (3a, 3b, 3c, 3d) gemessen wird, eine externe Kraft, die auf das Sensorelement (10, 10a, 10b) ausgeübt wird, und eine Temperatur, der das Sensorelement (10, 10a, 10b) ausgesetzt ist, zu erfassen.

2. Das Sensorsystem (30) gemäß Anspruch 1, bei dem die zwei Elektroden (3a, 3b) kammförmige Elektroden (3a, 3b) oder Oberflächenelektroden (3c, 3d) sind.

3. Das Sensorsystem (30) gemäß Anspruch 1 oder 2, bei dem das Thermistorteil (5) einen negativen Temperaturkoeffizienten aufweist und/oder bei dem das Basismaterial (1) Flexibilität aufweist.

4. Die Sensorvorrichtung (20) gemäß einem der Ansprüche 1 bis 3, bei der eine Mehrzahl der Sensorelemente (10, 10a, 10b) auf dem Basismaterial (1) angeordnet ist.

5. Die Sensorvorrichtung (20) gemäß Anspruch 4, bei der die Mehrzahl von Sensorelementen (10, 10a, 10b) auf dem Basismaterial (1) in einer Array-Form angeordnet ist.

6. Ein Artikel, der folgende Merkmale aufweist:
das Sensorsystem gemäß einem der Ansprüche 1 bis 5; und
ein Erfassungszielobjekt (31), wobei
die Sensorvorrichtung (20) in Kontakt mit dem Erfassungszielobjekt (31) angeordnet ist.

7. Der Artikel (40) gemäß Anspruch 6, bei dem das Erfassungszielobjekt (31) eine Batteriezelle ist.

## Revendications

1. Système capteur (30) comprenant :
un dispositif capteur (20) comprenant :
un matériau de base (1) ; et
un élément capteur (10, 10a, 10b) disposé sur le matériau de base (1), dans lequel l'élément capteur (10, 10a, 10b) comprend deux électrodes (3a, 3b, 3c, 3d) et une partie formant thermistance (5) disposée entre les deux électrodes (3a, 3b, 3c, 3d) et formée de particules conductrices ou semi-conductrices (7) et d'un composant polymère organique (9) ;
un filtre (21) configuré pour extraire, à partir d'un signal électrique de la valeur de résistance mesurée pour l'élément capteur (10, 10a, 10b), des fluctuations relativement abruptes par rapport au temps sous la forme d'une composante de force externe et des fluctuations relativement légères par rapport au temps sous la forme d'une composante de température, dans lequel les fluctuations relativement abruptes et les fluctuations relativement légères sont séparées par un seuil ; et
une partie de traitement (23) qui est configurée pour acquérir un résultat de détection d'une force externe sur la base de la composante de force externe et pour acquérir un résultat de détection de température sur la base de la composante de température ;
dans lequel le système capteur (30) est configuré pour, sur la base d'une valeur de résistance mesurée entre les deux électrodes (3a, 3b, 3c, 3d), détecter une force externe appliquée à l'élément capteur (10, 10a, 10b) et une température à laquelle l'élément capteur (10, 10a, 10b) est exposé.

2. Système capteur (30) selon la revendication 1, dans lequel les deux électrodes (3a, 3b) sont des électrodes en forme de peigne (3a, 3b) ou des électrodes de surface (3c, 3d).

3. Système capteur (30) selon la revendication 1 ou 2, dans lequel la partie formant thermistance (5) a un coefficient de température négatif et/ou dans lequel le matériau de base (1) a une flexibilité.

4. Dispositif capteur (20) selon l'une quelconque des revendications 1 à 3, dans lequel une pluralité desdits éléments capteurs (10, 10a, 10b) est disposée sur le matériau de base (1).

5. Dispositif capteur (20) selon la revendication 4, dans lequel la pluralité d'éléments capteurs (10, 10a, 10b) est disposée sur le matériau de base (1) sous la forme d'un réseau.

6. Article comprenant :
le système capteur selon l'une quelconque des revendications 1 à 5 ; et
un objet cible de détection (31), dans lequel
le dispositif capteur (20) est disposé en contact avec l'objet cible de détection (31).

7. Article (40) selon la revendication 6, dans lequel l'objet cible de détection (31) est une cellule galvanique.
